# EUROPÄISCHE PATENTSCHRIFT

(11) **EP 4 059 631 B1**
(45) Veröffentlichungstag und Bekanntmachung des Hinweises auf die Patenterteilung: **29.10.2025**
(21) Anmeldenummer: 21163197.3
(22) Anmeldetag: 17.03.2021
(51) Int. Cl.: B21D 51/26, B23B 31/30, B65G 47/90

(54) **GREIFEINRICHTUNG**
GRIPPING DEVICE
DISPOSITIF DE PRÉHENSION

(43) Veröffentlichungstag der Anmeldung: 21.09.2022
(73) Patentinhaber: HINTERKOPF GmbH, 73054 Eislingen/Fils (DE)
(72) Erfinder: Brechling, Carsten, 89073 Ulm (DE); Waibel, Florian, 73525 Schwäbisch Gmünd (DE); Stix, Antal Miklós, 73054 Eislingen/Fils (DE)
(74) Vertreter: Patentanwälte Magenbauer & Kollegen Partnerschaft mbB

(56) Entgegenhaltungen:
- DE-B- 1 093 171
- FR-A- 1 044 075
- JP-A- H0 919 731
- JP-A- S58 125 323
- US-A- 3 831 995

## Beschreibung

Die Erfindung betrifft eine Greifeinrichtung zum Greifen eines dünnwandigen Aerosoldosenrohlings, mit einem Grundkörper, der aus einem gestaltfesten Material hergestellt ist und der längs einer Mittelachse von einer Bohrung durchsetzt ist, wobei eine Innenoberfläche der Bohrung mit einer umlaufenden, in radialer Richtung nach außen erstreckten Radialnut versehen ist, sowie mit einem in der Radialnut aufgenommenen, aus einem gummielastischen Material hergestellten Greifring, der eine radial innenliegende Greiffläche für eine Anlage an einem Aerosoldosenrohling und eine radial außenliegende Arbeitsfläche aufweist, wobei die Arbeitsfläche zusammen mit einander gegenüberliegenden Axialflächen der Radialnut und einer radial außenliegenden Umfangsfläche der Radialnut einen Fluidarbeitsraum, insbesondere einen Druckluft-Arbeitsraum, begrenzt, wobei am Greifring angrenzend an die Arbeitsfläche eine einstückig angeformte, umlaufende Dichtprofilierung ausgebildet ist und wobei die Dichtprofilierung zwei Profilbereiche aufweist, die symmetrisch zu einer Symmetrieebene angeordnet sind, wobei die Symmetrieebene quer zur Mittelachse ausgerichtet ist.

Aus der JP H09 19731 A ist ein Behälterhalteelement bekannt, bei dem ein Grundkörper an einem Innenumfang mit einer ringförmigen Nut versehen ist, in der ein Gefäßhalteelement aufgenommen ist, das aus einem elastischen Material hergestellt ist und das in einer Radiusrichtung frei beweglich ist, wobei durch eine Luftzufuhr in einem vom Gefäßhalteelement und der Nut begrenzten Kanal eine außenliegende Rückseite des Gefäßhalteelements mit einer radial nach innen wirkenden Drucckraft beaufschlagt wird, um eine Festlegung des Behälters zu bewirken.

Aus der DE 10 93 171 B ist eine Spanneinrichtung bekannt, die insbesondere als Vorschubzange für umlaufende Werkstücke an Drehmaschinen genutzt werden kann und die einen das Werkstück allseitig umfassenden ringförmigen Balg aus Gummi oder ähnlichem elastischem Werkstoff aufweist, wobei der Balg durch ein Druckmittel zum Spannen des Werkstücks beaufschlagt werden kann und im Querschnitt zickzackförmig ausgebildet ist, wobei der Balg im Längsschnitt tonnenförmig gestaltet und in einer tonnenförmigen Ausnehmung der Vorschubzange gelagert ist.

Die JP S58 125323 A offenbart eine Halteeinrichtung für ein Gefäß, die einen Stützkörper mit einem Aufnahmebereich für das Gefäß aufweist, wobei der Stützkörper mit vielen kleinen Durchgangslöchern versehen ist, die in einen Zwischenraum außerhalb des Aufnahmebereich münden, wobei der Zwischenraum von einer formstabilen Außenhülle begrenzt ist und durch eine Unterdruckeinrichtung mit einem Unterdruck versorgt werden kann. Dadurch kann das Gefäß fest an einer Innenoberfläche des Stützkörpers angesaugt werden.

Aus der JP H09 19731 A ist ein Halter für einen Dosenrohling bekannt, bei dem eine ringförmig ausgebildete Gummimanschette eine umlaufende Nut, die in einem formstabilen Gehäuse in radialer Richtung nach außen sowie in axialer Richtung erstreckt ist, radial nach innen abdichtet aufgenommen ist und dadurch mit dem Gehäuse einen Ringkanal ausbildet, in den ein druckbeaufschlagtes Fluid bereitgestellt werden kann, um die Gummimanschette in radialer Richtung nach innen zu verdrängen, um damit den Dosenrohling festzulegen.

Die US 3 831 995 A offenbart eine pneumatisch betätigbare Vorrichtung zum Anheben von Flaschen, bestehend aus einem starren, zylindrischen Halter und einer in diesem angeordneten Auskleidung aus Gummi, die unter dem Einfluß von dem Halter in seiner Längsachse zugeführter Druckluft radial verformbar ist, um den Hals einer Flasche zu ergreifen, wobei innerhalb der Auskleidung ein starrer, zylindrischer Einsatz angeordnet ist, der eine solche Verformung in Teilbereichen verhindert und dessen eines Ende im Wesentlichen geschlossen und das andere Ende offen ist, wobei der Einsatz im überwiegenden Längenbereich der Auskleidung eine solche Verformung verhindert, während er im restlichen Längenbereich der Auskleidung eine solche radiale Verformung zulässt, daß die Umfangskante des offenen Endes des Einsatzes gegen den Innenumfang der Auskleidung hin aufgeweitet ist und daß bei zwischen Halter und Auskleidung eingeleiteter Druckluft der untere Rand der Auskleidung unter Einwirkung der nach innen gebogenen Umfangskante des Einsatzes konzentrisch zum Hais der Flasche expandiert und diesen am gesamten Umfang umschließt.

Aus der FR 1 044 075 A ist eine Vorrichtung zum Greifen von Flaschen bekannt, bei der eine zylindrische Hülse aus steifem Material vorgesehen ist, die auf eine Spannscheibe geschraubt wird, deren unteres inneres Ende eine konisch zulaufende Form aufweist, die in einen inneren Hohlraum mündet, indem sie eine innere Schulter bildet. Unterhalb der Scheibe ist eine Unterlegscheibe untergebracht, die durch Unterlegscheiben in einem gewissen Abstand von der Scheibe gehalten wird. Die Spannzange ist zwischen der Scheibe und der Schulter untergebracht und hat in dieser Ausführungsform eine zylindrische Form mit einem kreisförmigen Flansch an jedem Ende, wobei ein zylindrischer und starrer Abstandshalter zwischen den vorgenannten Flanschen angeordnet ist.

Die Aufgabe der Erfindung besteht darin, eine Greifeinrichtung bereitzustellen, die den Aerosoldosenrohling mit einer gleichmäßigen Flächenpressung greift.

Diese Aufgabe wird mit den Merkmalen des Anspruchs 1 gelöst. Mit der Dichtprofilierung wird die abdichtende Aufnahme des Greifrings in der Radialnut und damit die Begrenzung des Fluidarbeitsraums sichergestellt. Hierbei ist vorteilhaft, dass aufgrund der einstückigen Anformung der Dichtprofilierung am Greifring eine Reduzierung der Anzahl der notwendigen Dichtflächen bewirkt werden kann, da Dichtflächen entfallen können, die ansonsten bei einer separat ausgebildeten Dichteinrichtung zwischen der Radialnut und dem Greifring vorgesehen werden müssten, wie dies aus dem Stand der Technik bekannt ist. Somit ist es möglich, eine vorteilhafte Übertragung von Druckkräften, die auf die Arbeitsfläche des Greifrings wirken, auf den zeitweilig festzulegenden Aerosoldosenrohling zu bewirken. Insbesondere kann der Greifring hinsichtlich seiner Profilierung derart gestaltet werden, dass die gewünschte homogene Kraftübertragung vom Greifring auf die Außenoberfläche des Aerosoldosenrohlings gewährleistet ist.

Ferner ist vorgesehen, dass die Dichtprofilierung zwei Profilbereiche aufweist, die symmetrisch zu einer Symmetrieebene angeordnet sind, wobei die Symmetrieebene quer zur Mittelachse ausgerichtet ist. Jeder der Profilbereiche ist dazu ausgebildet, an einer zumindest im Wesentlichen in axialer Richtung ausgerichteten Seitenfläche der Radialnut abdichtend anzuliegen, um damit die gewünschte Dichtwirkung zwischen dem Grundkörper und dem Greifring zu gewährleisten. Bevorzugt ist vorgesehen, dass die einander gegenüberliegenden Seitenflächen der Radialnut parallel zueinander ausgerichtet sind und jeweils als ebene Ringflächen ausgebildet sind, an denen die jeweiligen Profilbereiche abdichtend anlegen können.

Erfindungsgemäß ist vorgesehen, dass der Profilbereich in einer Querschnittsebene, die die Mittelachse umfasst, in radialer Richtung nach außen keilförmig verjüngt ausgebildet ist und von der Arbeitsfläche durch eine radial nach innen in den Greifring eingebrachte, insbesondere halbkreisförmig profilierte, Nut getrennt ist und für eine abdichtende Anlage an der gegenüberliegenden Axialfläche der Radialnut ausgebildet ist. Hierbei sind die Profilbereiche in der Art von Lippendichtungen ausgebildet, die einstückig am Innenring angeformt sind und die bei einer Druckbeaufschlagung des Fluidarbeitsraums eine Schwenkbewegung ihrer radial außenliegenden Endbereiche erfahren, wodurch eine abdichtende Anlage der Profilbereiche an den jeweils benachbart angeordneten Axialflächen der Radialnut gewährleistet ist. Die benachbart zum Profilbereich in die Arbeitsfläche eingebrachte Nut hat die Aufgabe, den jeweiligen Profilbereich derart von der Arbeitsfläche zu entkoppeln, dass die gewünschte Schwenkbewegung für den radial außen liegenden Endbereich des Profilbereichs bei einer bestimmungsgemäßen Gebrauch der Greifeinrichtung zu einer zuverlässigen Abdichtwirkung für den Fluidarbeitsraum führt.

Ferner ist es vorteilhaft, wenn der Grundkörper einen, vorzugsweise rotationssymmetrisch zur Mittelachse ausgebildeten, Schnittstellenabschnitt aufweist, der für eine Kopplung mit einer Aufnahme an einem Werkstückrundtisch einer Bearbeitungsmaschine, insbesondere einer Einziehmaschine, ausgebildet ist.

Vorteilhafte Ausführungsformen der Erfindung sind in der Zeichnung dargestellt. Hierbei zeigt:
- Figur 1: eine schematische Schnittdarstellung einer nicht zur Erfindung gehörenden Greifeinrichtung,
- Figur 2: eine Detaildarstellung einer Profilierung eines nicht zur Erfindung gehörenden Greifrings,
- Figur 3: eine schematische Schnittdarstellung eines Abschnitts einer nicht zur Erfindung gehörenden Greifeinrichtung, und
- Figur 4: eine schematische Darstellung eines Abschnitts einer vorteilhaften Ausführungsform einer Greifeinrichtung.

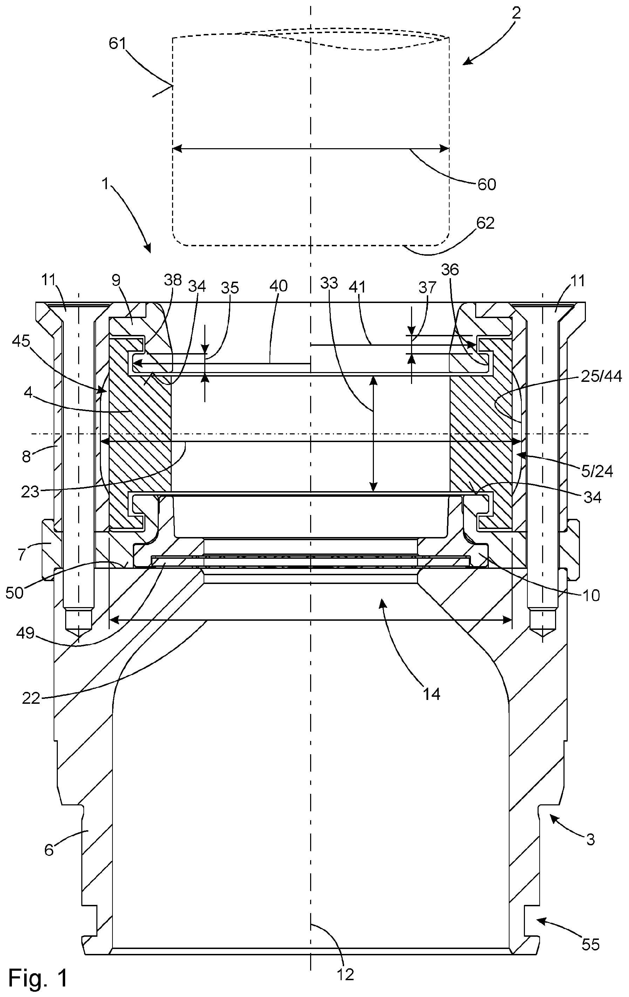

Eine in der Figur 1 rein schematisch dargestellte, nicht zur Erfindung gehörende Greifeinrichtung 1 dient zur zeitweiligen Festlegung eines nur schematisch und abschnittsweise dargestellten Aerosoldosenrohlings 2. Der Aerosoldosenrohling 2 ist vorzugsweise als einseitig mit einem Boden versehene kreiszylindrische Hülse aus einer Aluminiumlegierung hergestellt und weist eine Wandstärke auf, die deutlich unterhalb von 0,1mm liegt. Derartige Aerosoldosenrohlinge 2 werden beispielsweise auf einer Einziehmaschine an ihrem offenen Endbereich plastisch deformiert, so dass nach Abschluss der plastischen Deformation ein nicht dargestelltes Sprühventil angebracht werden kann. Für die Durchführung solcher plastischen Deformationsvorgänge auf einer Einziehmaschine ist eine zuverlässige Festlegung des Aerosoldosenrohlings 2 erforderlich, um die während der Bearbeitung auftretenden Bearbeitungskräfte abstützen zu können. Aufgrund der sehr geringen Wandstärke moderner Aerosoldosenrohlinge 2 ist eine Kraftübertragung zwischen dem Aerosoldosenrohling 2 und der Greifeinrichtung 1 über eine möglichst große Fläche bei möglichst geringer Flächenpressung erforderlich, um ein Kollabieren des Aerosoldosenrohlings 2 zu vermeiden.

Die Greifeinrichtung 1 umfasst einen rein exemplarisch aus mehreren Bauteilen zusammengesetzten Grundkörper 3, wobei die nachstehend näher beschriebenen Bauteile des Grundkörpers 3 aus Materialien hergestellt sind, die bei einem bestimmungsgemäßen Gebrauch der Greifeinrichtung 1 gestaltfest sind. Typischerweise werden für die Bauteile des Grundkörpers 3 metallische Materialien wie Stahl und Aluminium sowie Kunststoffmaterialien wie beispielsweise POM (Polyoxymethylen) oder PEEK (Polyetheretherketon) eingesetzt. Ferner umfasst die Greifeinrichtung 1 einen aus einem gummielastischen Material wie beispielsweise NBR (Acrylnitril-Butadien-Kautschuk) hergestellten Greifring 4, der in einer im Grundkörper 3 ausgebildeten Radialnut 5 aufgenommen ist und der bei einer Zufuhr von druckbeaufschlagtem Fluid in die Radialnut 5 aus einer in der Figur 1 dargestellten Ruheposition in eine Funktionsposition überführt werden kann, in der eine Festlegung des Aerosoldosenrohlings 2 in der Greifeinrichtung 1 gewährleistet ist.

Rein exemplarisch umfasst der Grundkörper 3 der Greifeinrichtung 1 ein Koppelteil 6, einen Zwischenring 7, einen Außenring 8, einen Führungsring 9 sowie einen Bodenring 10. Hierbei ist vorgesehen, dass der Zwischenring 7, der Führungsring 9, der Bodenring den sowie der Greifring 4 mit Hilfe des Außenrings 8, der rein exemplarisch über 2 Befestigungsschrauben 11 am Koppelteil 6 festgelegt ist, jeweils in einer vorgegebenen Position gehalten werden, wobei der Greifring 4 mit einer gewissen Beweglichkeit in der vom Zwischenring 7, vom Außenring 8 sowie vom Führungsring 9 begrenzten Radialnut 5 aufgenommen ist. Dementsprechend begrenzt der Grundkörper 3 eine Ausnehmung oder Bohrung 14, die längs einer Mittelachse 12 erstreckt ist. Ferner umfasst der Grundkörper 3 einen am Koppelteil 6 ausgebildeten Schnittstellenabschnitt 55, der für eine Festlegung der Greifeinrichtung an einem nicht dargestellten Werkstückrundtisch einer Bearbeitungsmaschine, insbesondere einer Einziehmaschine, ausgebildet ist.

Wie der Darstellung der Figur 1 entnommen werden kann, weisen sowohl die Radialnut 5 als auch der Greifring 4 in einer mit der Darstellungsebene der Figur 1 übereinstimmenden und eine Mittelachse 12 umfassenden Querschnittsebene jeweils eine Profilierung auf, die im weitesten Sinne als W-förmig beschrieben werden kann. Hierbei ist zu bemerken, dass eine Profilierung des Greifrings 4 und eine Profilierung der Radialnut 5 zumindest nahezu geometrisch ähnlich ausgebildet sind, wobei die geometrischen Abweichungen zwischen der Profilierung des Greifrings 4 und der Profilierung der Radialnut 5 nachstehend näher beschrieben werden.

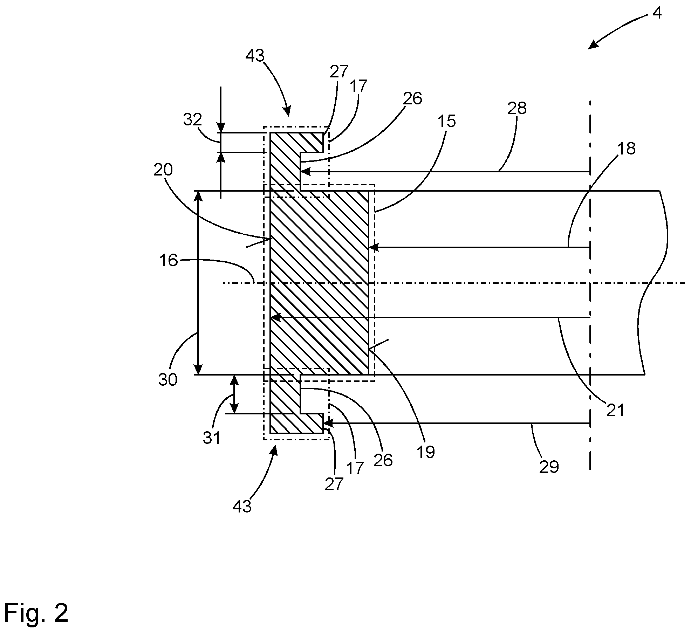

Beispielhaft kann der Greifring 4 gemäß der Detaildarstellung der Figur 2 als Kombination eines Innenrings 15 mit rechteckigem Querschnitt mit spiegelsymmetrisch zu einer Spiegelebene 16 am Innenring 15 angebrachten, L-förmigen Profilringen 17 beschrieben werden, wobei die Profilringe 17, die auch als Profilbereiche des Greifrings 4 bezeichnet werden, jeweils einen radial nach innen gewandten L-Schenkel aufweisen und eine Dichtprofilierung 43 bilden.

Rein exemplarisch ist vorgesehen, dass in der Freigabestellung für den Greifring 4, wie sie in den Figuren 1 und 2 gezeigt ist, ein Innendurchmesser 18 einer auch als Greiffläche bezeichneten Innenoberfläche 19 des Greifrings 4 geringfügig größer als ein Außendurchmesser 60 des in der Figur 1 schematisch dargestellten Aerosoldosenrohlings 2 ist. Hierdurch wird ein weitgehend reibungsfreies Einschieben des Aerosoldosenrohlings 2 in den Greifring 4 gewährleistet, sofern sich dieser in seiner Freigabestellung befindet.

Eine radial außen liegende Außenoberfläche 20 des Greifrings 4, die auch als Arbeitsfläche bezeichnet wird, weist einen in der Figur 2 eingezeichneten Außendurchmesser 21 auf, der einem ersten, kleinen Innendurchmesser 22 einer Umfangsfläche 44 der Radialnut 5 entspricht. Vorzugsweise ist vorgesehen, dass die Außenoberfläche 20 als Mantelfläche eines Kreiszylinders ausgebildet ist. Ein zweiter, Innendurchmesser 23 der Umfangsfläche 44 der Radialnut 5 ist größer als der Außendurchmesser 21 der Außenoberfläche 20, wodurch auch in der Freigabestellung des Greifrings 4 ein umlaufender Ringkanal 24 zwischen der Außenoberfläche 20 und einer Innenoberfläche 25 des Zwischenrings 7 freigehalten ist.

An jedem der Profilringe 17 sind eine rein exemplarisch kreiszylindrisch ausgebildete erste Dichtfläche 26 sowie eine rein exemplarisch kreiszylindrisch ausgebildete zweite Dichtfläche 27 vorgesehen, wobei ein erster Innendurchmesser 28 der ersten Dichtfläche 26 größer als ein zweiter Innendurchmesser 29 der zweiten Dichtfläche 27 gewählt ist. Wie der Darstellung der Figur 2 ferner entnommen werden kann, weist der Innenring 15 eine Axialerstreckung 30 auf. Die erste Dichtfläche 26 weist eine Axialerstreckung 31 auf. Die zweite Dichtfläche 27 weist eine Axialerstreckung 32 auf.

Beispielhaft ist vorgesehen, dass die geometrisch ähnlich zur Profilierung des Greifrings 4 ausgebildete Radialnut 5 derart gestaltet ist, dass bei einer in Radialrichtung erfolgenden Relativbewegung des Greifrings 4 gegenüber dem Grundkörper 3 möglichst keine Reibungsverluste auftreten. Dies wird beispielhaft dadurch gewährleistet, dass ein Abstand 33 zwischen axial ausgerichteten und einander gegenüberliegenden Ringflächen 34 des Zwischenrings 7 größer als die Axialerstreckung 30 des Innenrings 15 ist. Ferner ist vorgesehen, dass eine Axialerstreckung 35 einer radial nach außen gerichteten ersten Stützfläche 36, die in gleicher Weise sowohl am Zwischenring 7 als auch am Führungsring 9 ausgebildet ist, kleiner als die Axialerstreckung 31 der ersten Dichtfläche 26 gewählt ist. Darüber hinaus ist vorgesehen, dass eine Axialerstreckung 37 einer radial nach außen gerichteten zweite Stützfläche 38, die in gleicher Weise sowohl am Zwischenring 7 als auch am Führungsring 9 ausgebildet ist, größer als die Axialerstreckung 32 der ersten Dichtfläche 27 gewählt ist.

Zusätzlich kann vorgesehen sein, wie dies auch der Darstellung der Figuren 1 und 2 zu entnehmen ist, dass ein erster Außendurchmesser 40 der ersten Stützfläche 36, die jeweils gleichartig am Zwischenring 7 und am Führungsring 9 ausgebildet ist, kleiner als der erste Innendurchmesser 28 der ersten Dichtfläche 26 gewählt ist. Ergänzend oder alternativ kann vorgesehen sein, wie dies auch der Darstellung der Figuren 1 und 2 zu entnehmen ist, dass ein zweiter Außendurchmesser 41 der zweiten Stützfläche 38, die jeweils gleichartig am Zwischenring 7 und am Führungsring 9 ausgebildet ist, kleiner als der zweite Innendurchmesser 29 der zweiten Dichtfläche 27 gewählt ist.

Durch diese Maßnahmen soll sichergestellt werden, dass bei einer Beaufschlagung des Fluidarbeitsraums 45, der von der Radialnut 5 und der Außenoberfläche 20 des Greifrings 4, die auch als Arbeitsfläche bezeichnet wird, begrenzt wird, zunächst eine möglichst reibungsfreie Relativbewegung des Greifrings 4 gegenüber dem Grundkörper 3 erfolgt, die als Einschnürungsbewegung angesehen werden kann und bei der eine Reduktion der Durchmesser des Greifrings 4 erfolgt. Hierbei ist zu berücksichtigen, dass aufgrund der geometrischen Gestaltung des Greifrings 4 und der Radialnut 5 eine gewisse Leckage in Kauf genommen wird, so dass in den Fluidarbeitsraum 45 einströmendes, druckbeaufschlagtes Arbeitsfluid zumindest teilweise in radialer Richtung nach innen abströmt. Prinzipiell wird jedoch davon ausgegangen, dass trotz einer gewissen Leckage die gewünschte radiale Verlagerung des Greifrings 4 und die damit einhergehende Durchmesserverringerung für den Greifring 4 stattfindet. Beispielhaft sind die Geometrien des Greifrings 4 und der Radialnut 5 derart aufeinander abgestimmt, dass im Zuge dieser Durchmesserverringerung zunächst die zweiten Dichtfläche 27 in abdichtende Anlage an die zweiten Stützfläche 38 gelangen, wodurch ein Abströmen von druckbeaufschlagtem Fluid in radialer Richtung nach innen beendet wird. Aufgrund der axialen Beabstandung der zweiten Dichtflächen 27 vom Innenring 15 wird bei weiter ansteigendem Fluiddruck im Fluidarbeitsraum 45 eine radial nach innen gerichtete Verlagerung des Innenrings 15 ermöglicht, ohne dass es hierbei zu einer unerwünschten Auswölbung der auch als Greiffläche bezeichneten Innenoberfläche 19 des Innenrings 15 kommt. Somit gelangt die Innenoberfläche 19 in flächigen Kontakt mit einer Außenoberfläche 61 des Aerosoldosenrohlings 2 und kann damit den Aerosoldosenrohlings 2 kraftschlüssig in der Greifeinrichtung 1 festlegen.

Diese kraftschlüssige Festlegung des Aerosoldosenrohlings 2 in der Greifeinrichtung 1 erfolgt typischerweise jedoch erst zu einem Zeitpunkt, wenn ein Bodenbereich 62 des Aerosoldosenrohlings 2 kraftschlüssig in dem Bodenring 10 aufgenommen ist, der rein exemplarisch drehbar im Zwischenring 7 aufgenommen ist und der über eine nicht näher dargestellte Nadellagerung 49 drehbeweglich an einer Axialstirnfläche 50 des Koppelteils 6 abgestützt ist.

Um eine Freigabe des Aerosoldosenrohlings 2 zu bewirken, ist es vorgesehen, einen Druckabbau im Fluidarbeitsraum 45 vorzunehmen. Hierzu kann vorgesehen sein, dass eine fluidisch kommunizierend mit dem Fluidarbeitsraum 45 verbundenes, nicht dargestelltes Entlüftungsventil von einer zugeordneten, ebenfalls nicht dargestellten Steuerungseinrichtung, angesteuert wird, um ein Entweichen des druckbeaufschlagten Arbeitsfluid, insbesondere Druckluft, aus dem Fluidarbeitsraum 45 zu ermöglichen.

Aufgrund der gummielastischen Eigenschaften des Greifrings 4 findet eine elastische Rückverformung des Greifrings 4 aus der nicht dargestellten Blockierstellung in die Freigabestellung gemäß den Figuren 1 und 2 statt, die mit einer Vergrößerung der Durchmesser des Greifrings 4 verbunden ist. Dementsprechend wird die kraftschlüssige Verbindung mit dem Aerosoldosenrohling 2 aufgehoben, so dass dieser mittels eines nicht dargestellten Abziehwerkzeugs aus der Greifeinrichtung 1 entnommen werden kann. Besonders vorteilhaft ist es, dass bei der Reduktion des Drucks für das druckbeaufschlagte Arbeitsfluid im Fluidarbeitsraum aufgrund der vorstehend näher beschriebenen geometrischen Eigenschaften des Greifrings 4 und der Radialnut 5 ein abheben der zweiten Dichtfläche in 27 von den zugeordneten zweiten Stützflächen 38 ein zusätzlicher Spalt freigegeben wird, durch den das druckbeaufschlagte Arbeitsfluid aus dem Fluidarbeitsraum 45 in radialer Richtung nach innen abströmen kann, wodurch eine noch schnellere Rückdeformation des Greifrings 4 ermöglicht wird.

Bei einer nicht näher dargestellten Weiterbildung der Greifeinrichtung gemäß der Figur 1 ist vorgesehen, dass an der Außenoberfläche des Greifrings 4 wenigstens eine radial nach innen gerichtete Ausnehmung ausgebildet ist, in die ein mit dem Außenring verbundener Zapfen eingreift, um hierdurch eine Verdrehsicherung für den Greifring 4 zu gewährleisten.

Bei einer nicht näher dargestellten Abwandlung der Greifeinrichtung gemäß der Figur 1 ist der Bodenring einstückig mit dem Zwischenring ausgeführt, wobei in diesem Fall die drehbewegliche Lagerung für den Bodenring entfällt.

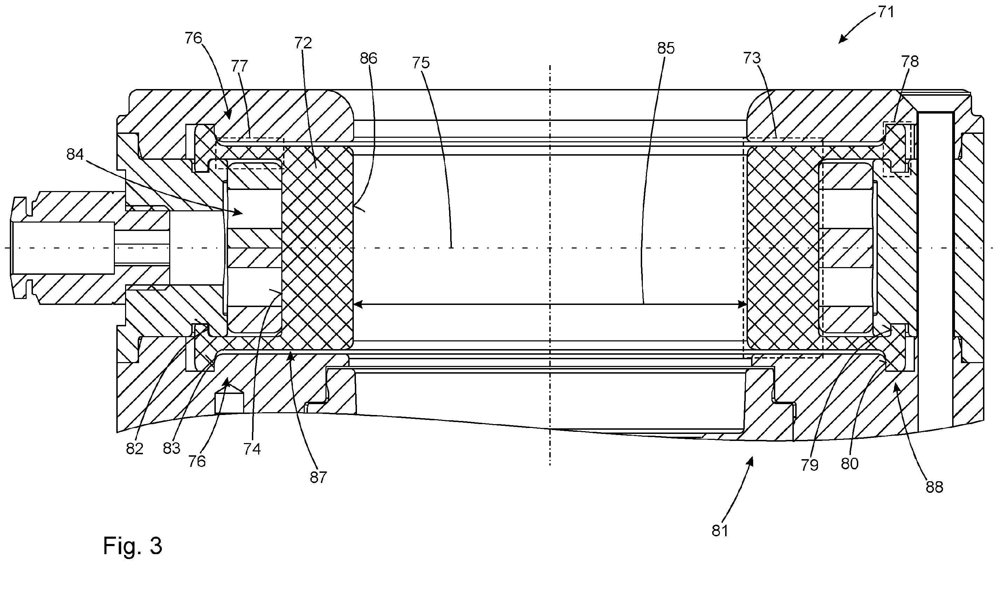

Bei der in der Figur 3 gezeigten, nicht zur Erfindung gehörenden Greifeinrichtung 71 ist für den Grundkörper 81 eine im Wesentlichen gleichartige Bauweise wie für den Grundkörper 3 vorgesehen, so dass für die einzelnen Komponenten des Grundkörpers 81 zur Vermeidung von Wiederholungen keine nähere Beschreibung erfolgt. Übereinstimmend mit dem Greifring 4 der weist der Greifring 72 einen Innenring 73 mit einem im Wesentlichen rechteckigen Querschnitt auf. In axialen Endbereichen des Greifrings 72 grenzen an die auch als Arbeitsfläche bezeichnete Außenoberfläche 73 jeweils spiegelsymmetrisch zu einer Spiegelebene 75 angeordnete Profilbereiche 76 an, die in radialer Richtung nach außen erstreckt sind und die eine Dichtprofilierung 88 bilden. Jeder der Profilbereiche 76 umfasst einen direkt mit dem Innenring 73 verbundenen Dehnring 77 und einen außen am Dehnring 77 angebrachten Haltering 78. Beispielhaft ist vorgesehen, dass eine radiale Erstreckung des Dehnrings 77 ausgehend von der Außenoberfläche 74 in etwa einer radialen Erstreckung des Innenrings 73 entspricht. Ferner ist vorgesehen, dass eine Axialerstreckung des Dehnrings 77 rein exemplarisch weniger als 10 Prozent einer Axialerstreckung des Innenrings 73 entspricht. Demgegenüber ist eine Axialerstreckung für den Haltering 78 derart gewählt, dass sie zumindest dem zweifachen der Axialerstreckung des Dehnrings 77 entspricht. Besonders bevorzugt ist vorgesehen, dass der Haltering 78 im Wesentlichen mittig gegenüber dem Dehnring 77 angeordnet ist, wodurch sich für den Profilbereiche 76 eine im Wesentlichen T-förmige Profilierung ergibt. Die zur Aufnahme des Greifrings 72 dienende Radialnut 87 im Grundkörper 81 ist zumindest bereichsweise geometrisch ähnlich zum greifring 72 ausgebildet.

Wie aus der Darstellung der Figur 3 entnommen werden kann, sind radial nach innen gerichtete erste und zweite Dichtflächen des Halterings 78 an gegenüberliegend angeordneten, dem Grundkörper 81 der Greifeinrichtung 71 zugehörigen ersten und zweiten Stützflächen abgestützt, wodurch bereits in der Freigabestellung gemäß der Figur 3 eine Dichtwirkung für den Fluidarbeitsraum 84 gewährleistet ist. Durch die geometrische Gestaltung des Dehnrings 77 und des Halterings 78 wird bei einer Druckbeaufschlagung des Fluidarbeitsraums 84 und einer damit einhergehenden Durchmesserreduktion für den Innenring 73 im Wesentlichen eine elastische Deformation des Dehnrings 77 hervorgerufen, während der Haltering 78 zumindest weit gehend formstabil bleiben kann. Da der Dehnring 77 aufgrund seiner geometrischen Gestaltung im Vergleich mit dem Innenring 73 eine deutlich größere Elastizität aufweist, wird bei der Druckbeaufschlagung des Fluidarbeitsraums 84 und der dadurch bewirkten Reduzierung eines Innendurchmessers 85 des Greifrings 71 eine kreiszylindrische Geometrie für eine Innenoberfläche 86 des Greifrings 72 aufrecht erhalten, so dass es zu einer flächigen Anlage der Innenoberfläche 86 am nicht dargestellten Aerosoldosenrohling kommt, ohne dass hierbei unerwünschte Inhomogenitäten im Hinblick auf die Flächenpressung zwischen der Innenoberfläche 86 und dem Aerosoldosenrohling auftreten.

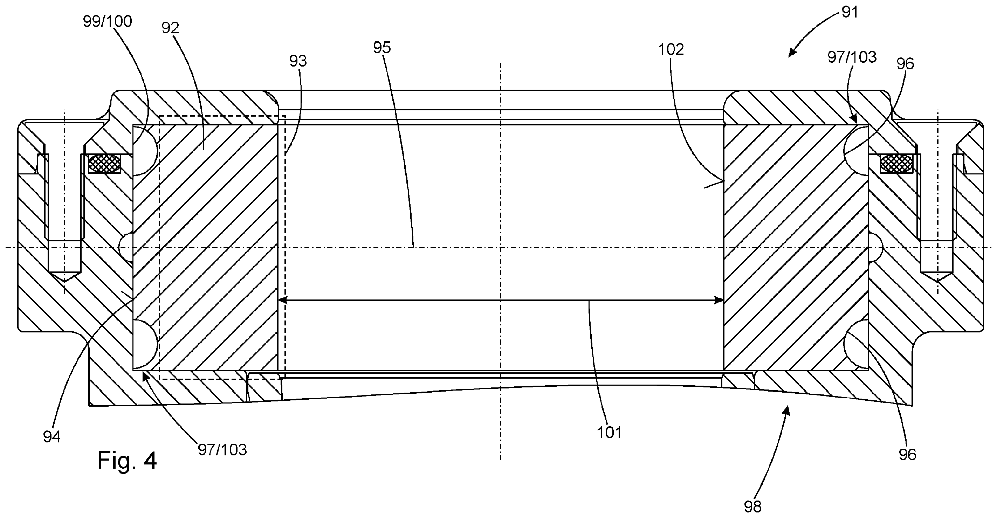

Bei der in der Figur 4 gezeigten erfindungsgemäßen Greifeinrichtung 91 weist der Greifring 92 übereinstimmend mit dem Greifring 4 gemäß den Figuren 1 und 2 einen Innenring 93 mit einem im Wesentlichen rechteckigen Querschnitt auf. In axialen Endbereichen der kreiszylindrisch ausgebildeten Außenoberfläche 94 des Greifrings 92 sind jeweils spiegelsymmetrisch zu einer Spiegelebene 95 angeordnete, in radialer Richtung nach innen gerichtete Umfangsnuten 96 eingebracht. Rein exemplarisch weisen die Umfangsnuten 96 jeweils einen halbkreisförmigen Querschnitt auf. Die Umfangsnuten 96 sind dabei derart platziert, dass jeweils an axialen Endbereichen des Greifrings 92 keilförmig zulaufende Profilbereiche 97 ausgebildet werden, die aufgrund der reduzierten Materialstärke eine deutlich höhere Flexibilität als die übrigen Bereiche des Greifrings 92 aufweisen und die eine Dichtprofilierung 103 bilden. Bei einer Druckbeaufschlagung des Fluidarbeitsraums 100, der zwischen dem Greifring 92 und der im Grundkörper 98 eingebrachten Radialnut 99 ausgebildet ist, legen sich die Profilbereiche 97 abdichtend an die jeweils benachbart angeordneten, rein exemplarisch kreisringförmig ausgebildeten Ringflächen 101 der Radialnut 99 an, so dass eine Abdichtung des Fluidarbeitsraums 100 gewährleistet ist. Bei einem weiteren Druckaufbau im Fluidarbeitsraum 100 erfolgt die elastische Deformation des Greifrings 92, die mit einer Reduzierung des Innendurchmessers 101 des Greifrings 92 einhergeht, womit die gewünschte kraftschlüssige Festlegung des Aerosoldosenrohlings an der auch als Greiffläche bezeichneten Innenoberfläche 102 des Greifrings 92 bewirkt werden kann. Wie der Darstellung der Figur 4 entnommen werden kann, weist die Radialnut 99 in der Darstellungsebene gemäß der Figur 4 einen rechteckigen Querschnitt auf, so dass hiermit eine besonders kostengünstige Herstellung des Grundkörpers 98 verwirklicht werden kann. In gleicher Weise gilt dies auch für den Greifring 92, der keine komplexen Geometrien aufweist.

## Patentansprüche

1. Greifeinrichtung (91) zum Greifen eines dünnwandigen Aerosoldosenrohlings (1), mit einem Grundkörper (98), der aus einem gestaltfesten Material hergestellt ist und der längs einer Mittelachse (12) von einer Bohrung (14) durchsetzt ist, wobei eine Innenoberfläche der Bohrung (14) mit einer umlaufenden, in radialer Richtung nach außen erstreckten Radialnut (99) versehen ist, sowie mit einem in der Radialnut (99) aufgenommenen, aus einem gummielastischen Material hergestellten Greifring (92), der eine radial innenliegende Greiffläche (102) für eine Anlage an einem Aerosoldosenrohling (2) und eine radial außenliegende Arbeitsfläche (94) aufweist, wobei die Arbeitsfläche (94) zusammen mit einander gegenüberliegenden Axialflächen (34) der Radialnut (99) und einer radial außenliegenden Umfangsfläche (44) der Radialnut (99) einen Fluidarbeitsraum (100), begrenzt, wobei am Greifring (92) angrenzend an die Arbeitsfläche (94) eine einstückig angeformte, umlaufende Dichtprofilierung (103) ausgebildet ist, wobei die Dichtprofilierung (103) zwei Profilbereiche (97) aufweist, die symmetrisch zu einer Symmetrieebene (95) angeordnet sind, wobei die Symmetrieebene (95) quer zur Mittelachse (12) ausgerichtet ist, **dadurch gekennzeichnet, dass** der Profilbereich (97) in einer Querschnittsebene, die die Mittelachse (12) umfasst, in radialer Richtung nach außen keilförmig verjüngt ausgebildet ist und von der Arbeitsfläche (94) durch eine radial nach innen in den Greifring (92) eingebrachte, insbesondere halbkreisförmig profilierte, Nut (96) getrennt ist und für eine abdichtende Anlage an der gegenüberliegenden Axialfläche der Radialnut (99) ausgebildet ist.

2. Greifeinrichtung (91) nach Anspruch 1, **dadurch gekennzeichnet, dass** der Grundkörper (98) einen, vorzugsweise rotationssymmetrisch zur Mittelachse ausgebildeten, Schnittstellenabschnitt (55) aufweist, der für eine Kopplung mit einer Aufnahme an einem Werkstückrundtisch einer Bearbeitungsmaschine, insbesondere einer Einziehmaschine, ausgebildet ist.

## Claims

1. Gripping device (91) for gripping a thin-walled aerosol can blank (1), having a base body (98) which is produced from a material which is resistant to deformation and through which a bore (14) passes along a central axis (12), an inner surface of the bore (14) being provided with a circumferential radial groove (99) extending radially outwardly, and with a gripping ring (72) which is received in the radial groove (99) and which is made of a rubber-elastic material and which has a radially inner gripping surface (102) for engagement with an aerosol can blank (2) and a radially outer working surface (94); the working surface (94) together with opposing axial surfaces (34) of the radial groove (99) and a radially outer peripheral surface (44) of the radial groove (99) delimits a fluid working space (100), wherein an integrally formed, circumferential sealing profiling (103) is formed on the gripping ring (92) adjacent to the working surface (94), wherein the sealing profiling (103) has two profiled regions (97) which are arranged symmetrically with respect to a plane of symmetry (95), the plane of symmetry (95) being aligned transversely with respect to the central axis (12), **characterized in that** the profile region (97) is designed to taper wedge-shaped outwards in a cross-sectional plane comprising the central axis (12) and is separated from the working surface (94) by a radially inwardly introduced, in particular semicircularly profiled, groove (96) in the gripping ring (92) and is designed for a sealing abutment against the opposite axial surface of the radial groove (99).

2. Gripping device (91) according to claim 1, **characterized in that** the base body (98) has an interface section (55), preferably formed rotationally symmetrically to the central axis, which is designed for coupling with a receptacle on a workpiece rotary table of a processing machine, in particular a drawing-in machine.

## Revendications

1. Dispositif de préhension (91) pour la préhension d'une ébauche (1) de bombe aérosol à paroi mince, avec un corps de base (98), qui est fabriqué à partir d'un matériau rigide et qui est traversé par un alésage (14) le long d'un axe central (12), dans lequel une surface intérieure de l'alésage (14) est pourvue d'une rainure radiale (99) périphérique s'étirant vers l'extérieur dans la direction radiale, ainsi qu'avec une bague de préhension (92) fabriquée à partir d'un matériau élastique en caoutchouc, logée dans la rainure radiale (99), qui présente une surface de préhension (102) située radialement à l'intérieur pour un appui sur une ébauche (2) de bombe aérosol et une face de travail (94) située radialement à l'extérieur, dans lequel la face de travail (94) délimite, conjointement avec des faces axiales (34) opposées les unes aux autres de la rainure radiale (99) et une face périphérique (44) située radialement à l'extérieur de la rainure radiale (99), une chambre de travail de fluide (100), dans lequel un profilé d'étanchéité (103) périphérique formé en une seule pièce est réalisé de manière adjacente sur la face de travail (94) sur la bague de préhension (92), dans lequel le profilé d'étanchéité (103) présente deux zones profilées (97) qui sont disposées symétriquement par rapport à un plan de symétrie (95), dans lequel le plan de symétrie (95) est orienté perpendiculairement à l'axe central (12), **caractérisé en ce que** la zone profilée (97) est réalisée, dans un plan de section transversale, qui comprend l'axe central (12), de manière conique vers l'extérieur dans la direction radiale et est séparée de la face de travail (94) par une rainure (96) pratiquée radialement vers l'intérieur dans la bague de préhension (92), en particulier profilée en forme de demi-cercle et est réalisée pour un appui étanche sur la face axiale opposée de la rainure radiale (99).

2. Dispositif de préhension (91) selon la revendication 1, **caractérisé en ce que** le corps de base (98) présente une section d'interface (55) réalisée de préférence de manière symétrique en rotation par rapport à l'axe central, qui est réalisée pour un couplage à un logement sur une table circulaire porte-pièce d'une machine d'usinage, en particulier d'une machine d'insertion.
